# EUROPEAN PATENT APPLICATION

(11) **EP 4 159 461 A1**
(43) Date of publication of application: **05.04.2023**
(21) Application number: 21792628.6
(22) Date of filing: 22.04.2021
(51) Int. Cl.: B42D 3/12, B42D 3/18, H04W 4/80, B42D 1/00

(54) **BOOK FOR CONTAINING SMART DEVICE**

(30) Priority: 22.04.2020 KR 20200048770
(71) Applicant: Kim, Myung Ran, Seoul 04382 (KR)
(72) Inventor: Kim, Myung Ran, Seoul 04382 (KR)
(74) Representative: Vossius & Partner Patentanwälte Rechtsanwälte mbB
(86) International application number: PCT/KR2021/005081
(87) International publication number: WO 2021/215839

(57) **Abstract**

The present invention relates to a book or smart device case in which a smart device can be embedded. The book or smart device case of the present invention not only contains the content and pictures with a story, but also has a smartphone storage unit inside so that parents do not let their children know that they are using a smartphone, and it can be stored regardless of the size or shape of the smart device and whether or not a protective case is installed.

## Description

### [Technical field]

The present invention relates to a book for storing smart devices and a smart device case.

### [Background]

Most parents with young children have many concerns about their children's smartphone usage. Many young children are addicted to the stimulating images and sounds coming from smart devices, and if they are not allowed, they will immediately show an emotional reaction. Because these children quietly immerse themselves in the hands of a smartphone, parents have no choice but to allow their child to use a smartphone.

Many studies have already been published on the effects of smartphones on infants and toddlers and their addiction. According to some of the research results, it was found that when infants and young children use smart devices (smartphones, tablet PC), their emotional regulation and cognitive abilities are lower than those of the non-using group. In particular, newborns are very vulnerable to electromagnetic waves from smartphones because their brains are small and the skull connection is not complete. It has been found that the electromagnetic waves of smartphones inhibit the development of brain functions in children and make the brain size smaller. Therefore, the World Health Organization (WHO) recommends that infants under the age of one do not be exposed to electronic devices, including smartphones.

Children in the early childhood period learn the words and actions of their parents as they are, and also learn the existence and use of smartphones from their parents' actions as well. Even if you do not verbally explain how to turn on the smartphone, how to play a video, how to enlarge a picture, etc., the child sees the parent's behavior and naturally imitates it. After all, as children grow up watching their parents use smartphones, their interest and dependence on smartphones will naturally increase.

As a result, in order for the child to have access to the smartphone as late as possible, it is desirable that the parents do not see themselves using the smartphone in front of the child as much as possible. However, the smartphone is not only a means of calling, but is closely related to the lives of modern people through a wide variety of functions such as messenger, web, surfing, document reading, news, e-mail work, and video viewing. Therefore, it is virtually impossible not to use a smartphone while caring for a child.

### [Detailed description of the invention]

### [Technical challenge]

There is a need for a technology that allows parents to use their smartphones as needed without showing their children the use of their smartphones.

### [Technical solution]

One object of the present invention is to provide a book comprising book case body; a storage unit in which a smart device can be stored in a book; a coupling unit that allows the smart device to be coupled and fixed to the storage unit; and a book cover covering the surface of the book case body.

Another object of the present invention is to provide a smart device case comprising smart device case body; a storage unit in which a smart device can be accommodated; a coupling unit that allows the smart device to be coupled and fixed to the storage unit; a book cover covering the surface of the smart device case body.

### [Effects of the Invention]

Regardless of the type, thickness, size, or presence of a smart device, the books and smart device cases capable of storing smart devices of the present invention make it impossible to distinguish the external appearance by making the external appearance exactly the same as the book while being able to firmly couple the smart device to the book or case internal storage part, so this allows the smart device to be used without notifying the people around it or the children of infants and toddlers.

### [Brief description of the drawings]

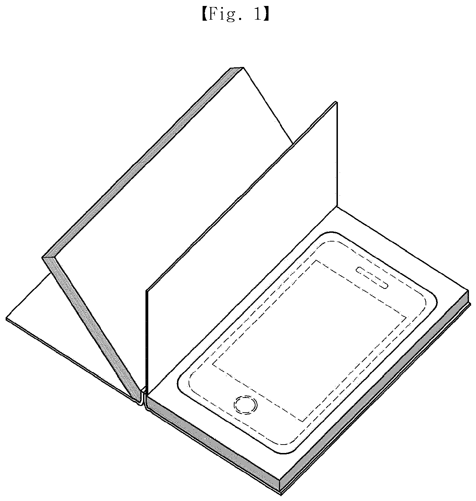

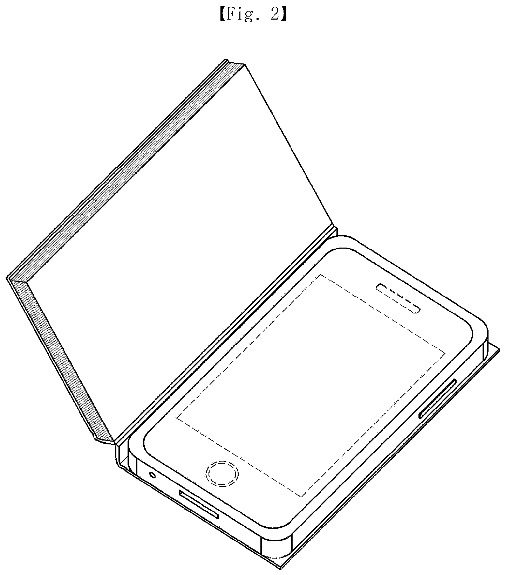

Fig. 1 and Fig. 2 show examples of books or cases that can accommodate smart devices of the present invention.

### [Best mode of invention]

One aspect of the present application for achieving the above object is a book comprising book case body; a storage unit in which a smart device can be stored in a book; a coupling unit that allows the smart device to be coupled and fixed to the storage unit; and a book cover covering the surface of the book case body.

Another aspect of the present application for achieving the above object is a smart device case comprising smart device case body; a storage unit in which a smart device can be accommodated; a coupling unit that allows the smart device to be coupled and fixed to the storage unit; a book cover covering the surface of the smart device case body.

### [Modes for carrying out the invention]

This will be described in detail as follows. Meanwhile, each description and embodiment disclosed in the present invention may be applied to each other description and embodiment. That is, all combinations of the various elements disclosed herein fall within the scope of the present invention. In addition, it cannot be considered that the scope of the present invention is limited by the specific descriptions described below.

One aspect of the present application for achieving the above object is a book comprising book case body; a storage unit in which a smart device can be stored in a book; a coupling unit that allows the smart device to be coupled and fixed to the storage unit; and a book cover covering the surface of the book case body.

Also, the present invention provide a smart device case comprising smart device case body; a storage unit in which a smart device can be accommodated; a coupling unit that allows the smart device to be coupled and fixed to the storage unit; a book cover covering the surface of the smart device case body.

In the present invention, 'book' refers to a physical form that systematically contains mental products, expressed by means of letters or pictures, in a dictionary. In the present invention, the type of book may be exemplarily a dictionary, a children's book, a magazine, a Bible, a textbook, a picture book, a comic book, an examination book, an e-book, a smart book, etc, bur it is not limited thereto as long as it can be recognized as a book in a socially conventional way.

The book of the present invention may be assigned an International Standard Book Number (ISBN).

In the present invention, the book case body or smart device case has a structure including a front cover, a joint, a groove, a spine (back), and a back cover in a book. The material of the book case body or smart device case of the present invention may be made of paper, wood, plastic, metal, synthetic resin, leather, artificial leather, silicone, etc., and may be a soft case or a hard case, and more preferably a hard case. Depending on the material and type of the case, the user's grip feeling may be different, and the protective effect of the smart device may vary.

In the present invention, the book case or smart device case may be to further include a plurality of inner or outer papers printed with text or pictures. In the present invention, the inner or the outer paper refers to a plurality of book sheets made of paper material, and by containing texts or pictures of various contents, the user can appreciate the contents of texts or pictures while using a smart device.

In the present invention, the book or smart device case may be to further include an inner middle cover attached to the folded surface between the housing and the book cover. The inner middle cover may consist of several sheets, or one or two sheets, and may be composed of paper, wood, plastic, metal or synthetic resin. The inner middle cover is configured to cover the storage unit quickly while being firmly attached to the folding surface, and serves to quickly hide the smart device attached to the storage unit. In addition, the inner middle cover may have a separate text or picture added, and magnets that are difficult to separate easily by infants and young children may be attached to the inner middle cover and the storage unit (receiving part), respectively.

In the present invention, the book case, the smart device case, the cover or the inner middle cover may include a near field communication (NFC) tag chip. If the NFC tag chip is a commercially available NFC chip, it can be used without limitation of the type. When the book case, smart device case, cover, or inner middle cover containing the NFC tag chip approaches the storage unit, the display power of the smart device is turned off, the sound function of the smart device is terminated, the screen of the smart device is turned off, or the screen of the smart device is converted into content about text or pictures of book. The NFC tag chip may be operated at a distance of 0.1 cm to 5 cm from the smart device accommodated in the receiving unit, and may not affect the smart device while the book is unfolded even if placed at the distance. Through the NFC function of the book case, the smart device case, the cover or the inner middle cover, the display power or sound function of the smart device stored in the storage unit can be quickly turned off, and the use of the smart device can be quickly concealed.

In the present invention, the smart device may be a smartphone or a tablet PC, but is not limited thereto as long as it is an electronic product that can be recognized as a smart device in a socially common sense.

In the present invention, the upper end, lower end, and side of the storage unit may have the same shape as the upper end, lower end, and side of the book. This ensures that the appearance is exactly the same as that of a regular book, so that people around you or small children are not informed of the use of the smart device. The upper part of the book of the present invention means the book head (upper part of the book)(top edge), the lower part means the book tail (the lower part of the book)(tail edge), and the side part means the book bag (the back part of the book)(fore-edge).

In the present invention, the inner surface of the accommodating part may be one capable of changing the length of the internal partitioning surface, so that the smart device can be firmly installed inside the accommodating part regardless of the type, year, size, thickness, and shape of the smart device. For example, there was a problem in that the cases used for conventional smart devices had to be individually manufactured according to the shape and thickness of the smart device of the corresponding model. However, the present invention has the advantage of being able to use the present invention as it is, even if the smart device being used is changed as the length of the inner surface of the storage (receiving) unit can be adjusted. The inner surface of the storage unit (accommodating part) may be made of an elastic material such as rubber or silicone, a cog wheel, a screw, a strap for adjusting the length, or a material using a spring.

In the present invention, the accommodating part may have a cooling pad applied to the inner partition surface, thereby effectively cooling the heat generated by the use of a smart device.

In the present invention, the receiving unit may further include a coupling unit capable of firmly coupling the smart device. Such a coupling part (coupling unit) is not limited to the type of configuration that can mount and fix smart devices, and examples thereof include magnets, jigs, tongs for fixing smart devices, suction pads, and smart device attachment pads made of silicon or synthetic resin.

In the present invention, the receiving unit may further include a charging unit that allows a charging cable capable of charging a battery of a smart device to pass through.

In the present invention, the book cover or smart device case cover refers to a book wing(flap), and as a cover over the case, the front and back sides can be folded into the inside of the case. The contents of the book or a photo may be printed on the book cover.

In the present invention, the book cover or smart device case cover and the book case body or smart device case body may be detachable using a magnet. Specifically, it may be that a magnet having an appropriate strength is built in the inside of the book cover and the inside of the book case body. Through this, the book cover can be easily replaced according to the needs of the user, and it can be maintained firmly by using the coupling force between the book cover and the case.

From the above description, those skilled in the art to which the present invention pertains will be able to understand that the present invention may be embodied in other specific forms without changing the technical spirit or essential characteristics thereof. In this regard, it should be understood that the embodiments described above are illustrative in all respects and not restrictive. The scope of the present invention should be construed as being included in the scope of the present invention, rather than the above detailed description, all changes or modifications derived from the meaning and scope of the claims described below and their equivalents.

## Claims

1. A book comprising book case body; a storage unit in which a smart device can be stored in a book; a coupling unit that allows the smart device to be coupled and fixed to the storage unit; and a book cover covering the surface of the book case body.

2. The book according to claim 1, wherein the book case further comprises a plurality of inner or outer papers on which texts or pictures are printed.

3. The book according to claim 1, wherein the book further comprises an inner middle cover attached to the folded surface between the storage unit and the book cover.

4. The book according to claim 1, wherein the smart device is a smart phone or a tablet PC.

5. The book according to claim 1, wherein the upper end, lower end, and side surfaces of the storage unit have the same shape as the upper end, lower end and side surfaces of the book.

6. The book according to claim 1, wherein the inner surface of the storage unit is that the length of the inner partition surface can be changed,

7. The book according to claim 1, wherein the book cover and the book case body are detachable using a magnet.

8. The book according to claim 1, wherein the inner middle cover include a near field communication (NFC) tag chip, and if the inner middle cover approaches the storage unit, the display power of the smart device is turned off, the sound function of the smart device is terminated, or the screen of the smart device is switched to the text or picture of the book.

9. A smart device case comprising smart device case body; a storage unit in which a smart device can be accommodated; a coupling unit that allows the smart device to be coupled and fixed to the storage unit; a book cover covering the surface of the smart device case body.
